(19) Europäisches Patentamt
European Patent Office
Office européen des brevets

(11) EP 2 663 594 B1

(12) EUROPEAN PATENT SPECIFICATION

(45) Date of publication and mention of the grant of the patent:
**26.12.2018 Bulletin 2018/52**

(21) Application number: **12704566.4**

(22) Date of filing: **10.01.2012**

(51) Int Cl.:
***C08K 5/00*** *(2006.01)* ***C08K 5/01*** *(2006.01)*
***C08L 23/06*** *(2006.01)*

(86) International application number:
**PCT/US2012/020784**

(87) International publication number:
**WO 2012/096962 (19.07.2012 Gazette 2012/29)**

(54) **ANTIOXIDANT COMPOUNDS FOR POLYOLEFIN RESINS**

ANTIOXIDANTIEN FÜR POLYOLEFINHARZE

COMPOSÉS ANTIOXYDANTS POUR RÉSINE DE POLYOLÉFINE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.01.2011 US 201161431724 P**

(43) Date of publication of application:
**20.11.2013 Bulletin 2013/47**

(73) Proprietor: **Dow Global Technologies LLC**
**Midland, MI 48674 (US)**

(72) Inventors:
- **DEMIRORS, Mehmet**
  **Pearland**
  **TX 77584 (US)**
- **KARJALA, Teresa P.**
  **Lake Jackson**
  **TX 77566 (US)**

(74) Representative: **Boult Wade Tennant LLP**
**Verulam Gardens**
**70 Gray's Inn Road**
**London WC1X 8BT (GB)**

(56) References cited:

| | |
|---|---|
| **EP-A1- 0 190 720** | **EP-A1- 1 944 327** |
| **EP-A2- 0 073 488** | **EP-A2- 0 313 076** |
| **GB-A- 2 085 898** | **US-A1- 2005 009 992** |

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 663 594 B1

## Description

Background and Summary of the Invention

Polyolefin resins such as polypropylene and polyethylene are used in many applications requiring good physical properties, easy processing, and sufficient stability to oxidation during processing for formation of articles. The stability of polyolefin resins is critical for industrial processes as these resins must be subjected to high temperatures and high shear forces in order for them to be formed into useful articles.

Generally these resins are protected from degradation and oxidation by addition of antioxidants. Usually two types of antioxidants are added. One is called a primary antioxidant which functions by reacting with a free radical formed through the mechanical or shear degradation of polyethylene molecules. A primary antioxidant reacts with the free radical and an oxygen adduct and converts this free radical to an inactive free radical. Such antioxidants are usually hindered phenolic esters. A second group of antioxidants is also needed for the polyethylene resins to be protected against oxidation called secondary antioxidants. These react with hydroperoxides formed with the reaction product of the primary antioxidant to prevent them from generating damaging free radicals. The secondary antioxidants convert hydroperoxides to stable entities that are incapable of generating free radicals. The secondary antioxidants are usually derivatives of phosphites.

While current antioxidants perform a very useful function, they do have some detrimental effects as well. First of all, they are much more expensive than polyethylene resins and add to the cost hence making such products less economical. As these are oxygenated or phosphonited materials they impart certain taste and odor characteristics to polyethylene resins which are undesirable for use in sensitive areas such as food packaging and potable water transport and distribution. It is also known that secondary antioxidants cause plate out, that is the phosphate will migrate to the surface of the film and form white powdery materials. In addition, they do tend to cause an increase in build-up at the exit of the processing equipment used in the manufacture of articles. Such problems cause a reduction in equipment productivity, as the production must be stopped and the equipment cleaned periodically. They may also cause quality issues and color development.

There is a need for a new class of antioxidants that can he more economical than the currently available ones and do not suffer from the shortcomings of the existing antioxidants.

EP-A-1,944,327 discloses a crosslinkable polymer composition comprising (i) an unsaturated polyolefin having a total amount of carbon-carbon double bonds/1000 carbon atoms of at least 0.38, and (ii) at least one crosslinking agent being a carbon-carbon initiator that is free of peroxide groups and capable of thermally decomposing into carbon-based free radicals by breaking at least one carbon-carbon single bond.

EP-A-190,720 discloses a process for the dehydrogenative dimerization and/or polymerization of organic compounds with active hydrogen atoms using perketals.

US-A-2005/009992 discloses a golf ball comprising a core and a cover, wherein at least the core or the cover comprises an elastomeric composition comprising a base polymer and a carbon-carbon initiator.

EP-A-073,488 discloses self-extinguishing polymeric compositions consisting of an olefinic polymer and, on the total weight of the composition, from 1% to 5% of red phosphorus, from 0% to 10% of a substance capable of mainly freeing ammonia by thermal decomposition, and from 0.3% to 2% of a promoter of free radicals.

EP-A-313076 discloses a process to prepare polyethylene using a diphenylethane derivative as C-C labile polymerization inhibitor, where the latter is up to 40 mol of a compound of the formula:

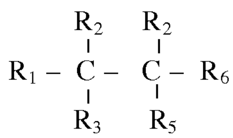

in which R1-R6 are hydrogen, straight-chain or branched alkyl, aryl, aralkyl, alkylaryl, substituted alkyl, substituted aryl, -CN, -COOH, ester, acid nitrile, alkoxy, alkylsilyloxy having 1 to 4 carbon atoms, arylsilyloxy or halogen, where each alkyl contains 1 to 10 carbon atoms, and up to 40 mol of an organic peroxide, oxygen or an azo compound, based on one million mol of ethylene, and the polymerization is carried out at from 60,000 to 350, 000 kPa and at from 130 to 400 DEG C.

GB-A-2,085,898 discloses self-extinguishing compositions substantially based on polyolefins, or on their polyblends with elastomers of the type EP, EPDM, SB, SBS, EVA which comprises, as flame retarding additives, a combination of from 1 to 5 parts of an aromatic bromine compound either alone or in admixture with an aliphatic-aromatic bromine compound: from 0.5 to 5 parts of a compound of antimony or bismuth; from 0.1 to 2 parts of an organic compound of the formula

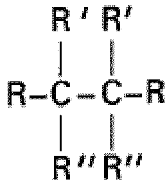

where R = $CH_3$ or $C_2H_5$; R' = $CH_3$ and R" = $C_6H_5$; and from 0.1 to 3 parts of a melamine compound, all parts by wt. per 100 parts by wt. of polymer.

Polyethylene has desirable properties that have helped to make it the highest volume polymer manufactured. Polyethylene can be made in different processes in order to give different properties. Known families of polyethylene include high density polyethylene (HDPE), linear low density polyethylene (LLDPE), and low density polyethylene made using high pressure reactors (LDPE). Within these broad classes many variations exist resulting from different types of polyolefin process technologies (for example, solution, slurry or gas phase) or from the use of different catalysts (for example, Ziegler-Natta or constrained geometry catalysts).

In all applications the polyethylene resins must go through a processing step to be converted to a final article or an intermediate article. Application of heat and shear causes degradation and with it deterioration of properties and in general loss of quality of product. For this reason most polyethylene resins must be stabilized with anti oxidants during the manufacturing step.

The stabilization of polyethylene is usually done by addition of primary antioxidants such as hindered phenolics (Irganox 1076 and Irganox 1010 available from Ciba Specialty Chemicals are two such products). In addition to primary antioxidants, secondary antioxidants are also used. Those are usually phosphate esters (such as Irgafos 168 also available from Ciba Specialty Chemicals).

Use of antioxidants greatly improves the stability of the polymer but this comes at a cost. In general, antioxidants can cause taste and odor for critical applications, build-up as white powder, technically known as plate out on films, and cause build-up on polymer dies (the part of the equipment where molten polymer exits the equipment).

The amount of antioxidant needed will depend on the polymer type and intended application but in general a mixture is used. It is not unusual for the conventional antioxidants to be somewhere from 1,000 ppm by weight to 5,000 ppm by weight. The conventional antioxidant materials are complex molecules made in multiple synthesis steps, hence more expensive than ethylene, rendering polyethylene resins more expensive.

One aspect of the present invention is a new composition that can stabilize polyolefins such as polyethylene against degrading forces of oxygen combined with heat and shear at very minute amounts up to 1 to 20% by weight of a conventional antioxidant formulation. Accordingly, another aspect of the invention is a stable polyethylene composition comprising a new type of antioxidant and a polyethylene resin first selecting a polyethylene resin having a density, as determined according to ASTM D792, in the range of from 0.875 g/cm$^3$ to 0.975 g/cm$^3$, and a melt index, as determined according to ASTM D1238 (2.16 kg, 190°C), in the range of from 0.01 g/10 min to 150 g/10 min and then incorporating the specified new antioxidant with the polyethylene resin in an amount and under conditions sufficient to increase the stability of the polyethylene resin. The new antioxidants can be added in an amount from 5 ppm by weight of the total composition to up to 1000 ppm of the total composition. If a mixture of the new antioxidants are used with the conventional antioxidants, the proportions must be adjusted to have the desired stabilization of the final formulation.

Another aspect of the present invention is a new method for increasing the stability of polyethylene involving mixing polyethylene with the specified antioxidants through regular extrusion processing. Accordingly, one aspect of the invention is a method for increasing the stability of a polyethylene resin comprising first selecting a polyethylene resin having a density, as determined according to ASTM D792, in the range of from 0.875 g/cm$^3$ to 0.975 g/cm$^3$, and a melt index, as determined according to ASTM D1238 (2.16 kg, 190°C), in the range of from 0.01 g/10 min to 150 g/10 min and then mixing the antioxidant with the polyethylene resin in an amount and under conditions sufficient to achieve desired stabilization of the polyethylene resin.

Another aspect of the present invention is a composition that maintains the melt index of the polyethylene resins under repeated processing steps.

Another aspect of the present invention is a composition that maintains the Viscosity Ratio of the polyethylene resins under repeated processing steps.

Another aspect of the present invention is a composition that maintains the melt strength of the polyethylene resins under repeated processing steps.

Another aspect of the present invention is a composition that maintains the melt index ratio ($I_{10}/I_2$) of the polyethylene resins under repeated processing steps.

Brief Description of the Drawings:

Figure 1 is a plot of melt index $I_2$ at 190°C versus pass through the extruder.
Figure 2 is a plot of melt index ratio $I_{10}/I_2$ at 190°C versus pass through the extruder.
Figure 3 is a plot of melt strength at 190°C versus pass through the extruder.
Figure 4 is a plot of Viscosity Ratio at 190°C versus pass through the extruder.
Figure 5 is a plot of tan delta at 0.1 rad/s at 190°C versus pass through the extruder.

Detailed Description of the Invention

In its broadest sense, the present invention is a new composition containing a new compound(s) that will provide stability to polyethylene resins. Polyethylene resins include all polymers or polymer blends which are derived from at least 50% by weight from ethylene monomer units. This includes materials known in the art as high density polyethylene (HDPE), linear low density polyethylene (LLDPE), and low density polyethylene made using high pressure reactors (LDPE).

The polyethylene resin selected should have a density, as determined according to ASTM D792, in the range of from 0.875 g/cm$^3$ to 0.975 g/cm$^3$, more preferably from 0.880 g/cm$^3$ to 0.970 g/cm$^3$ and a melt index, as determined according to ASTM D1238 (2.16 kg, 190°C), in the range of from 0.01 g/10min to 150 g/10 min, more preferably 0.1 g/10min to 60g/10min. Suitable polyethylene resins can be produced with conventional Ziegler Natta or Chromium catalysts but also with metallocene or single site catalysts. Such resins may have monomodal or multimodal molecular weight distributions. They can also be made by high pressure free radical processes also known as LDPE.

Once the polyethylene resin is selected, it is stabilized with the specific compound(s). Such compounds must be selected with care. They must generate free radicals that are relatively weak to abstract any hydrogens from the polymer thus not causing any degradation and change in molecular structure, specifically molecular weight or long chain branching. Such compound(s) usually have a decomposition temperature of less than 280°C, preferably less than 250°C and a maximum energy of decomposition of 10 kJ/mol or less. Most preferably, they must have an endothermic decomposition process (*i.e.,* they create no energy upon decomposition).

A new class of materials has been found which meets these requirements. This new class of materials corresponds to the formula:

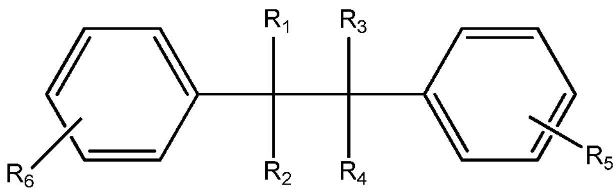

wherein $R_1$, $R_2$, $R_3$, $R_4$, $R_5$ and $R_6$ are selected from a hydrogen or an alkyl group having 1 to 24 carbon atoms, or a branched alkyl group having 1 to 24 carbon atoms, or a cyclic alkyl group with 1 to 24 carbon atoms. Particular members of this family include 3,4-diethyl-3,4-diphenyl hexane, 3,4-dipropyl-3,4-diphenyl hexane, 3,4-di-isopropyl-3,4-diphenyl hexane, 3,4-methyl-3,4-diphenyl hexane, 3,4-dibutyl-3,4-diphenyl hexane, 3,4-di-tert-butyl-3,4-diphenyl hexane, 3,4-di-iso-butyl-3,4-diphenyl hexane_and mixtures thereof.

In order to provide a broad range of stabilization, a mixture of compounds can be employed with different peak decomposition temperatures and energies of decomposition. In addition, compounds having decomposition temperature of less than 280°C and a maximum energy of decomposition of 10 kJ/mol or less may be combined with conventional antioxidants as needed up to any desired level not to exceed 90% by weight. In any composition of this invention, the compounds having decomposition temperature of less than 280°C and a maximum energy of decomposition of 10 kJ/mol should at least comprise of 1 % by weight, and for some embodiments more preferably at least 5 % by weight of the total antioxidant present in the final formulation.

Testing Methods

*Melt Strength*

Melt strength measurements were conducted on a Gottfert Rheotens 71.97 (Göettfert Inc.; Rock Hill, SC),

attached to a Gottfert Rheotester 2000 capillary rheometer. The melted sample (about 25 to 30 grams) was fed with a Göettfert Rheotester 2000 capillary rheometer, equipped with a flat entrance angle (180 degrees) of length of 30 mm, diameter of 2.0 mm, and an aspect ratio (length/diameter) of 15. After equilibrating the samples at 190°C for 10 minutes, the piston was run at a constant piston speed of 0.265 mm/second. The standard test temperature was 190°C. The sample was drawn uniaxially to a set of accelerating nips located 100 mm below the die, with an acceleration of 2.4 $mm/s^2$. The tensile force was recorded as a function of the take-up speed of the nip rolls. Melt strength was reported as the plateau force (cN) before the strand broke. The following conditions were used in the melt strength measurements: plunger speed = 0.265 mm/second; wheel acceleration = 2.4 $mm/s^2$; capillary diameter = 2.0 mm; capillary length = 30 mm; and barrel diameter = 12 mm.

*Melt Index*

Melt index, or I2, is measured in accordance with ASTM D 1238-10, Condition 190°C/2.16 kg, and is reported in grams eluted per 10 minutes. The I10 was measured in accordance with ASTM D 1238, Condition 190°C/10 kg, and was reported in grams.

*Density*

Samples for density measurements were prepared according to ASTM D 4703-10.
Samples were pressed at 190°C (374°F) for five minutes at 68 MPa (10,000 psi). The temperature was maintained at 190°C (374°F) for the above five minutes, and then the pressure was increased to 207 MPa (30,000 psi) for three minutes. This was followed by one minute hold at 21°C (70°F) and 207 MPa (30,000 psi). Measurements are made within one hour of sample pressing using ASTM D792-08, Method B.

*Dynamic Mechanical Spectroscopy*

Resins were compression-molded into "3 mm thick x 2.54 cm (1 inch)" circular plaques at 177°C (350°F) for five minutes, under 10.5 MPa (1500 psi) pressure in air. The sample was then taken out of the press, and placed on the counter to cool.

A constant temperature frequency sweep was performed using a TA Instruments "Advanced Rheometric Expansion System (ARES)," equipped with 25 mm (diameter) parallel plates, under a nitrogen purge. The sample was placed on the plate, and allowed to melt for five minutes at 190°C. The plates were then closed to a gap of 2 mm, the sample trimmed (extra sample that extends beyond the circumference of the "25 mm diameter" plate is removed), and then the test was started. The method had an additional five minute delay built in, to allow for temperature equilibrium. The experiments were performed at 190°C over a frequency range of 0.1 to 100 rad/s. The strain amplitude was constant at 10%. The stress response was analyzed in terms of amplitude and phase, from which the storage modulus (G'), loss modulus (G"), complex modulus (G*), complex viscosity $\eta^*$, tan ($\delta$) or tan delta, viscosity at 0.1 rad/s (V0.1), the viscosity at 100 rad/s (V100), and the Viscosity Ratio (V0.1/V100) were calculated.

*Differential Scanning Calorimetry (DSC)*

Differential Scanning Calorimetry (DSC) can be used to measure the thermal stability of a material over a wide range of temperatures. For example, the TA Instruments Q200 DSC, equipped with an RCS (refrigerated cooling system) is used to perform this analysis. A 0.5-2 mg sample is placed in a glass capillary tube, weighed, and flame sealed with a specified headspace gas while being kept cool using a "cold finger" device. Analysis is then performed to determine its thermal properties. For the analysis of the peak decomposition temperature of new antioxidants and their energy of decomposition, the sample size used is generally on the order of 10 to 20 mg.

The thermal behavior of the sample is determined by ramping the sample temperature up and down to create a heat flow versus temperature profile. First, the sample is rapidly taken to the desired initial temperature, and then heated at 10°C/min to the desired end temperature. Next, the sample is cooled. The sample is then heated again (this is the "reheat" ramp) at a 10 °C/minute heating rate (the reheating part is not done for free radical generator studies but only for polyethylene resin studies). Both heating curves are recorded. The initial heat curve is analyzed by setting baseline endpoints from the beginning to the end of thermal activity, or the case of incomplete endotherms/exotherms to the end of the test. The reheat is used to assist in the determination of the integration start and end. The values determined are peak temperature ($T_m$), peak thermal activity temperature, and energy (in Joules per gram).

For the compositions of the present invention, the peak temperature is recorded as well as the total decomposition energy by integration of the area between the curve of the first heat cycle and the baseline. As will be readily understood by one of skill in the art, if the decomposition is exothermic, then the area between the curve and the baseline

is integrated as negative due to the fact that there is negative heat flow. That is, the sample generates heat. If the sample is endothermic such that it takes heat, then the area is integrated as a positive number. In this case the curve is above the baseline.

*Triple Detector Gel Permeation Chromatography (TDGPC) - Conventional GPC, Light Scattering GPC, and gpcBR*

For the GPC techniques used herein (Conventional GPC, Light Scattering GPC, and gpcBR), a Triple Detector Gel Permeation Chromatography (3D-GPC or TDGPC) system was used. This system consists of a Waters (Milford, Mass) model 150C High Temperature Chromatograph (other suitable high temperatures GPC instruments include Polymer Laboratories (Shropshire, UK) Model 210 and Model 220), equipped with a Precision Detectors (Amherst, Mass.) 2-angle laser light scattering (LS) detector Model 2040, an IR4 infra-red detector from Polymer ChAR (Valencia, Spain), and a Viscotek (Houston, Texas) 150R 4-capillary solution viscometer (DP).

A GPC with these latter two independent detectors and at least one of the former detectors is sometimes referred to as "3D-GPC" or "TDGPC," while the term "GPC" alone generally refers to conventional GPC. Data collection is performed using Viscotek TriSEC software, Version 3, and a 4-channel Viscotek Data Manager DM400. The system is also equipped with an on-line solvent degassing device from Polymer Laboratories (Shropshire, United Kingdom).

The eluent from the GPC column set flows through each detector arranged in series, in the following order: LS detector, IR4 detector, then DP detector. The systematic approach for the determination of multi-detector offsets is performed in a manner consistent with that published by Balke, Mourey, et al. (Mourey and Balke, Chromatography Polym., Chapter 12, (1992)) (Balke, Thitiratsakul, Lew, Cheung, Mourey, Chromatography Polym., Chapter 13, (1992)), optimizing triple detector log (MW and intrinsic viscosity) results from using a broad polyethylene standard, as outlined in the section on Light Scattering (LS) GPC below in the paragraph following Equation (5).

Suitable high temperature GPC columns can be used, such as four 30 cm long Shodex HT803 13 μm (micron) columns, or four 30 cm Polymer Labs columns of 20 μm (micron) mixed-pore-size packing (MixA LS, Polymer Labs). Here, the MixA LS columns were used. The sample carousel compartment is operated at 140°C, and the column compartment is operated at 150°C. The samples are prepared at a concentration of "0.1 grams of polymer in 50 milliliters of solvent." The chromatographic solvent and the sample preparation solvent is 1,2,4-trichlorobenzene (TCB) containing 200 ppm of 2,6-di-tert-butyl-4methylphenol (BHT). The solvent is sparged with nitrogen. The polymer samples are gently stirred at 160°C for four hours. The injection volume is 200 microliters. The flow rate through the GPC is set at 1 ml/minute.

*Conventional GPC*

For Conventional GPC, the IR4 detector is used, and the GPC column set is calibrated by running 21 narrow molecular weight distribution polystyrene standards. The molecular weight (MW) of the standards ranges from 580 g/mol to 8,400,000 g/mol, and the standards are contained in 6 "cocktail" mixtures. Each standard mixture has at least a decade of separation between individual molecular weights. The standard mixtures are purchased from Polymer Laboratories. The polystyrene standards are prepared at "0.025 g in 50 mL of solvent" for molecular weights equal to or greater than 1,000,000 g/mol, and at "0.05 g in 50 mL of solvent" for molecular weights less than 1,000,000 g/mol. The polystyrene standards are dissolved at 80°C, with gentle agitation, for 30 minutes. The narrow standards mixtures are run first, and in order of decreasing highest molecular weight component to minimize degradation. The polystyrene standard peak molecular weights are converted to polyethylene molecular weight using Equation (1) (as described in Williams and Ward, J. Polym. Sci., Polym. Letters, 6, 621 (1968)):

$$\text{Mpolyethylene} = \text{A x (Mpolystyrene)}^{\text{B}} \qquad \text{(Eq. 1)},$$

where M is the molecular weight of polyethylene or polystyrene (as marked), and B is equal to 1.0. It is known to those of ordinary skill in the art that A may be in a range of about 0.38 to about 0.44, and is determined at the time of calibration using a broad polyethylene standard, as outlined in the section on Light Scattering (LS) GPC below in the paragraph following Equation (5). Use of this polyethylene calibration method to obtain molecular weight values, such as the molecular weight distribution (MWD or Mw/Mn), and related statistics, is defined here as the modified method of Williams and Ward. The number average molecular weight, the weight average molecular weight, and the z-average molecular weight are calculated from the following equations.

$$Mw_{CC} = \sum_i \left( \frac{C_i}{\sum_i C_i} \right) M_i = \sum_i w_i M_{cc,i} \quad \text{(Eq. 2)}$$

$$M_{n,cc} = \sum w_i / \sum \left( w_i / M_{cc,i} \right) \quad \text{(Eq. 3)}$$

$$M_{z,cc} = \sum \left( w_i M_{cc,i}^2 \right) / \sum \left( w_i M_{cc,i} \right) \quad \text{(Eq. 4)}$$

*Light Scattering (LS) GPC*

For the LS GPC, the Precision Detector PDI2040 detector Model 2040 is used. Depending on the sample, either the 15° angle or the 90° angle of the light scattering detector is used for calculation purposes. Here, the 15° angle was used.

The molecular weight data is obtained in a manner consistent with that published by Zimm (Zimm, B.H., J. Chem. Phys., 16, 1099 (1948)) and Kratochvil (Kratochvil, P., Classical Light Scattering from Polymer Solutions, Elsevier, Oxford, NY (1987)).

The overall injected concentration used in the determination of the molecular weight is obtained from the mass detector area, and the mass detector constant derived from a suitable linear polyethylene homopolymer, or one of the polyethylene standards of known weight average molecular weight. The calculated molecular weights are obtained using a light scattering constant derived from one or more of the polyethylene standards mentioned below and a refractive index concentration coefficient, dn/dc, of 0.104. Generally, the mass detector response and the light scattering constant should be determined from a linear standard with a molecular weight in excess of about 50,000 g/mole. The viscometer calibration can be accomplished using the methods described by the manufacturer, or, alternatively, by using the published values of suitable linear standards such as Standard Reference Materials (SRM) 1475a (available from National Institute of Standards and Technology (NIST)). The chromatographic concentrations are assumed low enough to eliminate addressing 2nd viral coefficient effects (concentration effects on molecular weight).

With 3D-GPC, absolute weight average molecular weight ("Mw, Abs") is determined using Equation (5) below, using the "peak area" method for higher accuracy and precision. The "LS Area" and the "Conc. Area" are generated by the chromatograph/detectors combination.

$$M_W = \sum_i w_i M_i = \sum_i \left( \frac{C_i}{\sum_i C_i} \right) M_i = \frac{\sum_i C_i M_i}{\sum_i C_i} = \frac{\sum_i LS_i}{\sum_i C_i} = \frac{LS\ Area}{Conc.\ Area} \quad \text{(Eq. 5)}$$

For each LS profile (for example, see Figures 1 and 2), the x-axis (log MWcc-CPC), where cc refers to the conventional calibration curve, is determined as follows. First, the polystyrene standards (see above) are used to calibrate the retention volume into "log $MW_{PS}$." Then, Equation 1 (Mpolyethylene = A x $(Mpolystyrene)^B$) is used to convert "log $MW_{PS}$" to "log $MW_{PE}$." The "log $MW_{PE}$" scale serves as the x-axis for the LS profiles of the experimental section (log $MW_{PE}$ is equated to the log MW(cc-CPC)). The y-axis for each LS profile is the LS detector response normalized by the injected sample mass. Initially, the molecular weight and intrinsic viscosity for a linear polyethylene standard sample, such as SRM1475a or an equivalent, are determined using the conventional calibrations ("cc") for both molecular weight and intrinsic viscosity as a function of elution volume.

In the low molecular weight region of the GPC elution curve, when the presence of a significant peak that is known to be caused by the presence of anti-oxidant or other additives, the presence of such peak will cause an underestimation of the number average molecular weight (Mn) of the polymer sample to give a overestimation of the sample polydispersity defined as Mw/Mn, where Mw is the weight average molecular weight. The true polymer sample molecular weight distribution can therefore be calculated from the GPC elution by excluding this extra peak. This process is commonly described as the peak skim feature in data processing procedures in liquid chromatographic analyses. In this process, this additive peak is skimmed off from the GPC elution curve before the sample molecular weight calculation is performed from the GPC elution curve.

*gpcBR Branching Index by Triple Detector GPC (3D-GPC)*

The gpcBR branching index is determined by first calibrating the light scattering, viscosity, and concentration detectors as described previously. Baselines are then subtracted from the light scattering, viscometer, and concentration chromatograms. Integration windows are then set to ensure integration of all of the low molecular weight retention volume range in the light scattering and viscometer chromatograms that indicate the presence of detectable polymer from the refractive index chromatogram. Linear polyethylene standards are then used to establish polyethylene and polystyrene Mark-Houwink constants. Upon obtaining the constants, the two values are used to construct two linear reference conventional calibrations for polyethylene molecular weight and polyethylene intrinsic viscosity as a function of elution volume, as shown in Equations (6) and (7):

$$M_{PE} = \left(\frac{K_{PS}}{K_{PE}}\right)^{1/\alpha_{PE}+1} \cdot M_{PS}^{\alpha_{PS}+1/\alpha_{PE}+1} \quad \text{(Eq. 6)},$$

$$[\eta]_{PE} = K_{PS} \cdot M_{PS}^{\alpha+1} / M_{PE} \quad \text{(Eq. 7)}.$$

The gpcBR branching index is a robust method for the characterization of long chain branching as described in Yau, Wallace W., "Examples of Using 3D-GPC - TREF for Polyolefin Characterization," Macromol. Symp., 2007, 257, 29-45. The index avoids the "slice-by-slice" 3D-GPC calculations traditionally used in the determination of g' values and branching frequency calculations, in favor of whole polymer detector areas. From 3D-GPC data, one can obtain the sample bulk absolute weight average molecular weight (Mw, Abs) by the light scattering (LS) detector, using the peak area method. The method avoids the "slice-by-slice" ratio of light scattering detector signal over the concentration detector signal, as required in a traditional g' determination.

With 3D-GPC, sample intrinsic viscosities are also obtained independently using Equations (8). The area calculation in Equation (5) and (8) offers more precision, because, as an overall sample area, it is much less sensitive to variation caused by detector noise and 3D-GPC settings on baseline and integration limits. More importantly, the peak area calculation is not affected by the detector volume offsets. Similarly, the high-precision sample intrinsic viscosity (IV) is obtained by the area method shown in Equation (8):

$$IV = [\eta] = \sum_i w_i IV_i = \sum_i \left(\frac{C_i}{\sum_i C_i}\right) IV_i = \frac{\sum_i C_i IV_i}{\sum_i C_i} = \frac{\sum_i DP_i}{\sum_i C_i} = \frac{DP\ Area}{Conc.\ Area} \quad \text{(Eq. 8)},$$

where DPi stands for the differential pressure signal monitored directly from the online viscometer.

To determine the gpcBR branching index, the light scattering elution area for the sample polymer is used to determine the molecular weight of the sample. The viscosity detector elution area for the sample polymer is used to determine the intrinsic viscosity (IV or [η]) of the sample.

Initially, the molecular weight and intrinsic viscosity for a linear polyethylene standard sample, such as SRM1475a or an equivalent, are determined using the conventional calibrations ("cc") for both molecular weight and intrinsic viscosity as a function of elution volume, per Equations (2) and (9):

$$[\eta]_{CC} = \sum_i \left(\frac{C_i}{\sum_i C_i}\right) IV_i = \sum_i w_i IV_{cc,i} \quad \text{(Eq. 9)}.$$

Equation (10) is used to determine the gpcBR branching index:

$$gpcBR = \left[ \left( \frac{[\eta]_{CC}}{[\eta]} \right) \cdot \left( \frac{M_W}{M_{W,CC}} \right)^{\alpha_{PE}} - 1 \right] \quad \text{(Eq. 10),}$$

wherein $[\eta]$ is the measured intrinsic viscosity, $[\eta]_{cc}$ is the intrinsic viscosity from the conventional calibration, Mw is the measured weight average molecular weight, and $M_{w,cc}$ is the weight average molecular weight of the conventional calibration. The weight average molecular weight by light scattering (LS) using Equation (5) is commonly referred to as "absolute weight average molecular weight" or "$M_w$, Abs." The $M_{w,cc}$ from Equation (2) using conventional GPC molecular weight calibration curve ("conventional calibration") is often referred to as "polymer chain backbone molecular weight," "conventional weight average molecular weight," and "$M_{w,GPC}$."

All statistical values with the "cc" subscript are determined using their respective elution volumes, the corresponding conventional calibration as previously described, and the concentration (Ci). The non-subscripted values are measured values based on the mass detector, LALLS, and viscometer areas. The value of $K_{PE}$ is adjusted iteratively, until the linear reference sample has a gpcBR measured value of zero. For example, the final values for $\alpha$ and Log K for the determination of gpcBR in this particular case are 0.725 and -3.355, respectively, for polyethylene, and 0.722 and -3.993, respectively, for polystyrene.

Once the K and $\alpha$ values have been determined using the procedure discussed previously, the procedure is repeated using the branched samples. The branched samples are analyzed using the final Mark-Houwink constants as the best "cc" calibration values, and Equations (2) - (9) are applied.

EXPERIMENTAL

*New Antioxidants*

For the purpose of this invention, any molecule fitting the requirement of peak decomposition temperature and the energy of decomposition can be used. A specific molecule with the chemical name 3,4-diethyl-3,4-diphenyl hexane was used with the following chemical formula:

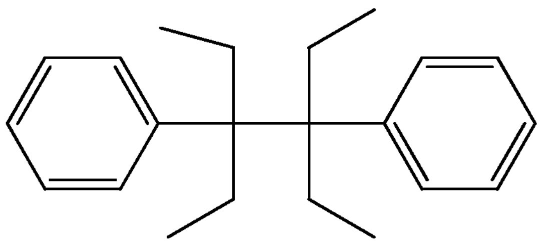

The peak decomposition temperatures and the decomposition energies of the free radical generators are given in Table 1. Note that the decomposition energy in kJ/mol is calculated as the decomposition energy in kJ/g multiplied by the molecular weight in g/mol multiplied by the percent purity divided by 100. This molecule had an endothermic decomposition meaning it did not generate any energy upon decomposition but absorbed energy. This may hereafter be referred to as the "new antioxidant".

Table 1: Decomposition temperatures and decomposition energy of 3,4-diethyl-3,4-diphenyl hexane

| Compound | MW (g/mol) | Purity % | Peak Temp. (°C) | Start Temp. (°C) | Finish Temp. (°C) | Decomp. Energy (J/g) | Decomp.Energy kJ/Mol |
|---|---|---|---|---|---|---|---|
| 3,4-diethyl-3,4-diphenyl hexane | 270.0 | 98.0 | 203.5 | 146.0 | 227.0 | 32.0 | 8.5 |

The linear low density polyethylene, LLDPE, used was produced by Ziegler Natta catalysis and was a 1 melt index (I2 or MI), 0.926 g/cm$^3$ density, with additives of 1,000 ppm Irgafos 168 (Ciba Specialty Chemicals, Inc., Basel, Switzerland).

Examples were produced from this LLDPE extruded with different concentrations of the new antioxidant. The

new antioxidant was added as an LDPE masterbatch having less than 1 % of the new antioxidant (note that the ppm levels reported below refer to the active ingredient only and not the entire masterbatch).

LLDPE and the new antioxidant were compounded in a 30mm co-rotating, intermeshing Coperion Werner-Pfleiderer ZSK-30 (ZSK-30) twin screw extruder. The ZSK-30 has ten barrel sections with an overall length of 960 mm and a 32 length to diameter ratio (L/D). A two hole strand die was used without a breaker plate or screen pack. The extruder consists of a DC motor, connected to a gear box by V-belts. The 15HP motor is powered by a GE adjustable speed drive located in a control cabinet. The control range of the screw shaft speed is 1:10. The maximum screw shaft speed is 500 RPM. A pressure transducer was positioned in front of the die to measure die pressure.

The extruder has 8 heated/cooled barrel sections along with a 30 mm spacer, which makes up five temperature controlled zones. It has a cooled only feed section and a heated only die section, which is held together by tie-rods and supported on the machine frame. Each section can be heated electrically with angular half-shell heaters and cooled by a special system of cooling channels.

The screws consist of continuous shafts on which screw-flighted components and special kneading elements are installed in any required order. The elements are held together radially by keys and keyways and axially by a screwed-in screw tip. The screw shafts are connected to the gear-shafts by couplings and can easily be pulled out of the screw barrel for dismantling.

A Conair pelletizer was used to pelletize the blends. It is a 220 volt variable speed, solid cutter unit. The variable speed motor drives a solid machined cutting wheel, which in turn drives a fixed metal roller. A movable rubber roller presses against the fixed roller and helps pull the strands by friction into the cutting wheel. The tension on the movable roller may be adjusted as necessary.

The temperatures were set in the feed zone, 4 zones in the extruder, and the die as:

| | |
|---|---|
| Feed: | 80°C |
| Zone 1: | 160°C |
| Zone 2: | 180°C |
| Zone 3: | 185°C |
| Zone 4: | 190°C |
| Die: | 230°C |

The screw shaft speed was set at 325 revolutions per minute (RPM), resulting in an output rate of approximately 18 kg/hr (40 lb/hr).

LLDPE was extruded with 19 ppm and 38 ppm of the new antioxidant. LLDPE was also extruded as obtained without addition of any additional antioxidant of any kind (except 1000 ppm Irgafos 168 that was already present in the LLDPE). Each sample after extrusion was extruded again ($2^{nd}$ pass) and one more time ($3^{rd}$ pass). These samples, along with LLDPE before extrusion were characterized, with the results shown in Table 1.

Table 2: Melt Indexes, DMS Viscosity, Melt strength, and TDGPC data from conventional calibration (cc) and gpcBR of LLDPE, LLDPE Extruded, and LLDPE with 19 ppm and 38 ppm new antioxidant ($1^{st}$ pass).

| | Comparative Example 1 | Comparative Example 2 | Example 1 | Example 2 |
|---|---|---|---|---|
| | LLDPE | LLDPE Extruded (1st Pass) | LLDPE Extruded with 19 ppm the new antioxidant (1st Pass) | LLDPE Extruded with 38 ppm the new antioxidant (1st Pass) |
| I2 (g/10 min) | 1.09 | 0.90 | 1.03 | 1.03 |
| I0 (g/10 min) | 8.51 | 7.67 | 8.27 | 8.24 |
| I10/I2 | 7.83 | 8.53 | 8.03 | 8.00 |
| Visc. 0.1 rad/s (Pa-s) | 7,982 | 10,525 | 8,808 | 8,651 |
| Visc 1 rad/s (Pa-s) | 6,359 | 7,324 | 6,675 | 6,579 |
| Visc. 10 rad/s (Pa-s) | 3,906 | 4,093 | 3,941 | 3,896 |

(continued)

| | Comparative Example 1 | Comparative Example 2 | Example 1 | Example 2 |
|---|---|---|---|---|
| | LLDPE | LLDPE Extruded (1st Pass) | LLDPE Extruded with 19 ppm the new antioxidant (1st Pass) | LLDPE Extruded with 38 ppm the new antioxidant (1st Pass) |
| Visc. 100 rad/s (Pa-s) | 1,600 | 1,609 | 1,607 | 1,592 |
| Visc. Ratio | 4.99 | 6.54 | 5.48 | 5.44 |
| Tan Delta 0.1 rad/s | 9.09 | 4.98 | 7.02 | 7.22 |
| Melt Strength (cN) | 2.7 | 3.8 | 3.7 | 3.5 |
| cc-GPC Mn (g/mol) | 26,680 | 26,390 | 26,030 | 25,350 |
| cc-GPC Mw (g/mol) | 106,380 | 106,780 | 101,090 | 101,540 |
| cc-GPC Mz (g/mol) | 319,700 | 316,000 | 285,400 | 284,000 |
| cc-GPC Mw/Mn | 3.99 | 4.05 | 3.88 | 4.01 |
| gpcBR | 0.015 | 0.069 | 0.131 | 0.138 |
| Visc. = Viscosity<br>Visc. Ratio = Viscosity Ratio | | | | |

Table 3: Melt Indexes, DMS Viscosity, Melt strength, and TDGPC data from conventional calibration (cc) and gpcBR of LLDPE, LLDPE Extruded, and LLDPE with 19 ppm and 38 ppm weight of the new antioxidantanti oxidant ($2^{nd}$ pass).

| | Comparative Example 3 | Example 3 | Example 4 |
|---|---|---|---|
| | LLDPE Extruded (2nd Pass) | LLDPE Extruded with 19 ppm new antioxidant (2nd Pass) | LLDPE Extruded with 38ppm the new antioxidant (2nd Pass) |
| I2 (g/10 min) | 0.78 | 0.99 | 1.01 |
| I0 (g/10 min) | 7.07 | 7.99 | 7.82 |
| I10/I2 | 9.11 | 8.05 | 7.76 |
| Visc. 0.1 rad/s (Pa-s) | 13,759 | 8,815 | 8,502 |
| Visc 1 rad/s (Pa-s) | 8,569 | 6,676 | 6,466 |
| Visc. 10 rad/s (Pa-s) | 4,434 | 3,951 | 3,839 |
| Visc. 100 rad/s (Pa-s) | 1,683 | 1,591 | 1,548 |
| Visc. Ratio | 8.18 | 5.54 | 5.49 |
| Tan Delta 0.1 rad/s | 3.54 | 6.86 | 6.92 |
| Melt Strength (cN) | 5.0 | 3.1 | 3.2 |
| cc-GPC Mn (g/mol) | 26,230 | 26,000 | 25,800 |
| cc-GPC Mw (g/mol) | 107,880 | 113,010 | 111,820 |
| cc-GPC Mz (g/mol) | 317,800 | 365,400 | 351,000 |

(continued)

| | Comparative Example 3 | Example 3 | Example 4 |
|---|---|---|---|
| | LLDPE Extruded (2nd Pass) | LLDPE Extruded with 19 ppm new antioxidant (2nd Pass) | LLDPE Extruded with 38ppm the new antioxidant (2nd Pass) |
| cc-GPC Mw/Mn | 4.11 | 4.35 | 4.33 |
| gpcBR | 0.056 | 0.066 | 0.065 |
| Visc. = Viscosity<br>Visc. Ratio = Viscosity Ratio | | | |

Table 4: Melt Indexes, DMS Viscosity, Melt strength, and TDGPC data from conventional calibration (cc) and gpcBR of LLDPE, LLDPE Extruded, and LLDPE with 19 ppm and 38 ppm by weight of the new antioxidant (3rd pass).

| | Comparative Example 4 | Example 5 | Example 6 |
|---|---|---|---|
| | LLDPE Extruded (3rd Pass) | LLDPE Extruded with 19 ppm the new antioxidant (3rd Pass) | LLDPE Extruded with 38 ppm the new antioxidant (3rd Pass) |
| I2 (g/10 min) | 0.62 | 0.99 | 1.03 |
| I0 (g/10 min) | 6.36 | 7.93 | 8.32 |
| I10/I2 | 10.30 | 8.02 | 8.08 |
| Visc. 0.1 rad/s (Pa-s) | 19,355 | 8,619 | 8,726 |
| Visc 1 rad/s (Pa-s) | 10,442 | 6,580 | 6,562 |
| Visc. 10 rad/s (Pa-s) | 4,754 | 3,871 | 3,865 |
| Visc. 100 rad/s (Pa-s) | 1,694 | 1,553 | 1,552 |
| Visc. Ratio | 11.43 | 5.55 | 5.62 |
| Tan Delta 0.1 rad/s | 2.45 | 6.62 | 6.63 |
| Melt Strength (cN) | 5.7 | 3.3 | 3.4 |
| cc-GPC Mn (g/mol) | 26,710 | 26,400 | 26,480 |
| cc-GPC Mw (g/mol) | 108,920 | 110,480 | 112,440 |
| cc-GPC Mz (g/mol) | 323,500 | 337,100 | 350,800 |
| cc-GPC Mw/Mn | 4.08 | 4.18 | 4.25 |
| gpcBR | 0.051 | 0.053 | 0.071 |
| Visc. = Viscosity<br>Visc. Ratio = Viscosity Ratio | | | |

Analysis of Tables 2 to 4 indicates that control sample (with only 1,000 ppm Irgafos 168 as obtained) shows a gradual increase in the melt strength, gradual decrease in the melt index, gradual increase in Viscosity Ratio, and gradual decrease in tan delta with each extrusion pass. On the other hand, the inventive examples show no or little change in all the parameters with each extrusion pass strongly indicating that no molecular degradation is taking place in the presence of the new anti oxidant with LLDPE. Figures 1 - 5 shows the trends of melt index, melt index ratio, melt strength, Viscosity Ratio, and tan delta at 0.1 rad/s for the LLDPE, LLDPE with 19 ppm of the new additive, and LLDPE with 38 ppm of the new additive as a function of extruder pass (3 passes).

## Claims

1. Use of a composition having a compound with a structure corresponding to the formula:

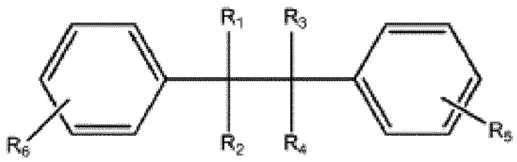

wherein $R_1$, $R_2$, $R_3$, $R_4$, $R_5$ and $R_6$ are selected from a hydrogen or an alkyl group having 1 to 24 carbon atoms, or a branched alkyl group having 1 to 24 carbon atoms, or a cyclic alkyl group with 1 to 24 carbon atoms; wherein said composition has a peak decomposition temperature of less than 280°C and a total decomposition energy which is endothermic or if exothermic, releases no more energy than 40 kJoules/mole, as an antioxidant for polyolefin resins; and
wherein the compound is incorporated with the polyolefin resin in an amount of from 5 ppm to 1000 ppm by weight of the total composition.

2. The use of claim 1 wherein the composition is 3,4-diethyl-3,4-diphenyl hexane.

3. The use of claim 1 wherein the composition is 3,4-dipropyl-3,4-diphenyl hexane.

4. The use of claim 1 wherein the composition is 3,4-diisopropyl-3,4-diphenyl hexane.

5. The use of claim 1 wherein the composition is 3,4-methyl-3,4-diphenyl hexane.

6. The use of claim 1 wherein the composition is 3,4-dibutyl-3,4-diphenyl hexane.

7. The use of claim 1 wherein the composition is 3,4-di-tert-butyl-3,4-diphenyl hexane.

8. The use of claim 1 wherein the composition is 3,4-di-iso-butyl-3,4-diphenyl hexane.

9. The use of claim 1 wherein the composition has a peak decomposition temperature of less than 250°C.

10. The use of claim 1 wherein the decomposition energy is endothermic.

11. A composition comprising of

a. a polyethylene resin having at least 50% by weight of units derived from ethylene, and having a density from 0.875 to 0.975 g/cm$^3$ and a melt index of 0.01 g/10 min to 150 g/10 min; and
b. a compound with a structure corresponding to the formula:

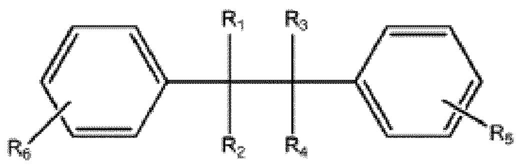

wherein $R_1$, $R_2$, $R_3$, $R_4$, $R_5$ and $R_6$ are selected from a hydrogen or an alkyl group having 1 to 24 carbon atoms, or a branched alkyl group having 1 to 24 carbon atoms, or a cyclic alkyl group with 1 to 24 carbon atoms, which is capable of generating free radicals at a peak decomposition energy which is endothermic or if exothermic, releases no more energy than 40 kJoules/mole, and
wherein the compound is incorporated with the polyethylene resin in an amount of from 5 ppm to 1000 ppm by weight of the total composition.

12. The composition of claim 11 wherein the compounds of component b are combined with other antioxidants such

that the compounds of component b comprise at least 1% of the total antioxidant present.

**13.** The composition of claim 11 wherein compound b is selected from the group consisting of 3,4-diethyl-3,4-diphenyl hexane, 3,4-dipropyl-3,4-diphenyl hexane, 3,4-diisopropyl-3,4-diphenyl hexane, 3,4-methyl-3,4-diphenyl hexane, 3,4-dibutyl-3,4-diphenyl hexane, 3,4-di-tert-butyl-3,4-diphenyl hexane, 3,4-di-iso-butyl-3,4-diphenyl hexane, and mixtures thereof.

**14.** An article made from composition of claim 11 wherein the article is a film.

**15.** An article made from composition of claim 11 wherein the article is an injected molded article.

**16.** An article made from composition of claim 11 wherein the article is a blow molded article.

**17.** An article made from composition of claim 11 wherein the article is a roto molded article.

**18.** An article made from composition of claim 11 wherein the article is an extruded pipe.

**19.** An article made from composition of claim 11 wherein the article is an extruded fiber.

## Patentansprüche

**1.** Verwendung einer Zusammensetzung, die eine Verbindung mit einer Struktur aufweist, die der folgenden Formel entspricht:

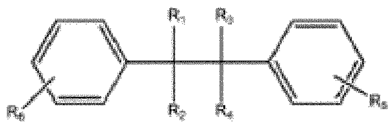

wobei $R_1$, $R_2$, $R_3$, $R_4$, $R_5$ und $R_6$ aus einem Wasserstoff oder einer Alkylgruppe mit 1 bis 24 Kohlenstoffatomen oder einer verzweigten Alkylgruppe mit 1 bis 24 Kohlenstoffatomen oder einer zyklischen Alkylgruppe mit 1 bis 24 Kohlenstoffatomen ausgewählt sind;
wobei die Zusammensetzung eine Spitzenzersetzungstemperatur von weniger als 280 °C und eine Gesamtzersetzungsenergie aufweist, die endotherm ist, oder, falls exotherm, nicht mehr Energie als 40 kJoules/mol freisetzt, als ein Antioxidationsmittel für Polyolefinharze; und
wobei die Verbindung in das Polyolefinharz in einer Menge von 5 ppm bis 1000 ppm nach Gewicht der Gesamtzusammensetzung eingearbeitet ist.

**2.** Verwendung gemäß Anspruch 1, wobei die Zusammensetzung 3,4-Diethyl-3,4-diphenylhexan ist.

**3.** Verwendung gemäß Anspruch 1, wobei die Zusammensetzung 3,4-Dipropyl-3,4-diphenylhexan ist.

**4.** Verwendung gemäß Anspruch 1, wobei die Zusammensetzung 3,4-Di-isopropyl-3,4-diphenylhexan ist.

**5.** Verwendung gemäß Anspruch 1, wobei die Zusammensetzung 3,4-Methyl-3,4-diphenylhexan ist.

**6.** Verwendung gemäß Anspruch 1, wobei die Zusammensetzung 3,4-Dibutyl-3,4-diphenylhexan ist.

**7.** Verwendung gemäß Anspruch 1, wobei die Zusammensetzung 3,4-Ditert-butyl-3,4-diphenylhexan ist.

**8.** Verwendung gemäß Anspruch 1, wobei die Zusammensetzung 3,4-Di-iiso-butyl-3,4-diphenylhexan ist.

**9.** Verwendung gemäß Anspruch 1, wobei die Zusammensetzung eine Spitzenzersetzungstemperatur von weniger als 250 °C aufweist.

**10.** Verwendung gemäß Anspruch 1, wobei die Zersetzungsenergie endotherm ist.

**11.** Eine Zusammensetzung, die Folgendes beinhaltet:

a. ein Polyethylenharz mit mindestens 50 Gewichts-% an Einheiten, abgeleitet von Ethylen, und einer Dichte von 0,875 bis 0,975 g/$cm^3$ und einem Schmelzindex von 0,01 g/10 min bis 150 g/10 min; und
b. eine Verbindung mit einer Struktur, die der folgenden Formel entspricht:

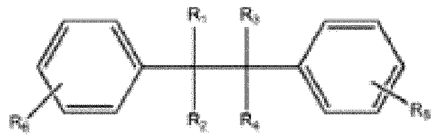

wobei $R_1$, $R_2$, $R_3$, $R_4$, $R_5$ und $R_6$ aus einem Wasserstoff oder einer Alkylgruppe mit 1 bis 24 Kohlenstoffatomen oder einer verzweigten Alkylgruppe mit 1 bis 24 Kohlenstoffatomen oder einer zyklischen Alkylgruppe mit 1 bis 24 Kohlenstoffatomen ausgewählt sind, die fähig ist, freie Radikale bei einer Spitzenzersetzungsenergie, die endotherm ist, oder, falls exotherm, nicht mehr Energie als 40 kJoules/mol freisetzt, zu erzeugen, und
wobei die Verbindung in das Polyethylenharz in einer Menge von 5 ppm bis 1000 ppm nach Gewicht der Gesamtzusammensetzung eingearbeitet ist.

**12.** Zusammensetzung gemäß Anspruch 11, wobei die Verbindungen von Komponente b so mit anderen Antioxidationsmitteln kombiniert werden, dass die Verbindungen der Komponente b mindestens 1 % des gesamten vorhandenen Antioxidationsmittels beinhalten.

**13.** Zusammensetzung gemäß Anspruch 11, wobei Verbindung b ausgewählt ist, aus der Gruppe, bestehend aus 3,4-Diethy1-3,4-diphenylhexan, 3,4-Dipropy1-3,4-diphenylhexan, 3,4-Diisopropy1-3,4-diphenylhexan, 3,4-Methyl-3,4-diphenylhexan, 3,4-Dibutyl-3,4-diphenylhexan, 3,4-Di-tert-butyl- 3,4-diphenylhexan, 3,4-Di-iso-butyl-3,4-diphenylhexan und Mischungen davon.

**14.** Ein Artikel, der aus der Zusammensetzung gemäß Anspruch 11 hergestellt ist, wobei der Artikel eine Folie ist.

**15.** Ein Artikel, der aus der Zusammensetzung gemäß Anspruch 11 hergestellt ist, wobei der Artikel ein eingespritzter geformter Artikel ist.

**16.** Ein Artikel, der aus der Zusammensetzung gemäß Anspruch 11 hergestellt ist, wobei der Artikel ein blasgeformter Artikel ist.

**17.** Ein Artikel, der aus der Zusammensetzung gemäß Anspruch 11 hergestellt ist, wobei der Artikel ein rotogeformter Artikel ist.

**18.** Ein Artikel, der aus der Zusammensetzung gemäß Anspruch 11 hergestellt ist, wobei der Artikel ein extrudiertes Rohr ist.

**19.** Ein Artikel, der aus der Zusammensetzung gemäß Anspruch 11 hergestellt ist, wobei der Artikel eine extrudierte Faser ist.

## Revendications

**1.** Utilisation d'une composition ayant un composé avec une structure correspondant à la formule :

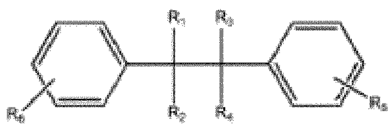

dans laquelle $R_1$, $R_2$, $R_3$, $R_4$, $R_5$ et $R_6$ sont sélectionnés parmi un hydrogène ou un groupe alkyle ayant de 1 à 24 atomes de carbone, ou un groupe alkyle ramifié ayant de 1 à 24 atomes de carbone, ou un groupe alkyle

cyclique avec de 1 à 24 atomes de carbone ;
dans laquelle ladite composition a une température de décomposition de pointe inférieure à 280 °C et une énergie de décomposition totale qui est endothermique ou si exothermique, ne libère pas plus d'énergie que 40 kJoules/mole, en tant qu'antioxydant pour des résines de polyoléfine ; et
dans laquelle le composé est incorporé avec la résine de polyoléfine dans une quantité allant de 5 ppm à 1 000 ppm en poids de la composition totale.

**2.** L'utilisation de la revendication 1 dans laquelle la composition est du 3,4-diéthyl-3,4-diphénylhexane.

**3.** L'utilisation de la revendication 1 dans laquelle la composition est du 3,4-dipropyl-3,4-diphénylhexane.

**4.** L'utilisation de la revendication 1 dans laquelle la composition est du 3,4-di-isopropyl-3,4-diphénylhexane.

**5.** L'utilisation de la revendication 1 dans laquelle la composition est du 3,4-méthyl-3,4-diphénylhexane.

**6.** L'utilisation de la revendication 1 dans laquelle la composition est du 3,4-dibutyl-3,4-diphénylhexane.

**7.** L'utilisation de la revendication 1 dans laquelle la composition est du 3,4-di-tert-butyl-3,4-diphénylhexane.

**8.** L'utilisation de la revendication 1 dans laquelle la composition est du 3,4-di-iso-butyl-3,4-diphénylhexane.

**9.** L'utilisation de la revendication 1 dans laquelle la composition a une température de décomposition de pointe inférieure à 250 °C.

**10.** L'utilisation de la revendication 1 dans laquelle l'énergie de décomposition est endothermique.

**11.** Une composition composée de

a. une résine de polyéthylène ayant au moins 50 % en poids d'unités dérivées de l'éthylène, et ayant une masse volumique allant de 0,875 à 0,975 g/cm$^3$ et un indice de fusion de 0,01 g/10 min à 150 g/10 min ; et
b. un composé avec une structure correspondant à la formule :

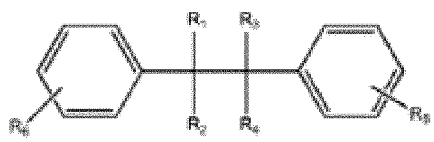

dans laquelle $R_1$, $R_2$, $R_3$, $R_4$, $R_5$ et $R_6$ sont sélectionnés parmi un hydrogène ou un groupe alkyle ayant de 1 à 24 atomes de carbone, ou un groupe alkyle ramifié ayant de 1 à 24 atomes de carbone, ou un groupe alkyle cyclique avec de 1 à 24 atomes de carbone, qui est capable d'engendrer des radicaux libres à une énergie de décomposition de pointe qui est endothermique ou si exothermique, ne libère pas plus d'énergie que 40 kJoules/mole, et
dans laquelle le composé est incorporé avec la résine de polyéthylène dans une quantité allant de 5 ppm à 1 000 ppm en poids de la composition totale.

**12.** La composition de la revendication 11 dans laquelle les composés du constituant b sont combinés avec d'autres antioxydants de telle sorte que les composés du constituant b représentent au moins 1 % de l'antioxydant total présent.

**13.** La composition de la revendication 11 dans laquelle le composé b est sélectionné dans le groupe constitué du 3,4-diéthyl-3,4-diphénylhexane, du 3,4-dipropyl-3,4-diphénylhexane, du 3,4-di-isopropyl-3,4-diphénylhexane, du 3,4-méthyl-3,4-diphénylhexane, du 3,4-dibutyl-3,4-diphénylhexane, du 3,4-di-tert-butyl-3,4-diphénylhexane, du 3,4-di-iso-butyl-3,4-diphénylhexane, et de mélanges de ceux-ci.

**14.** Un article fait à partir de la composition de la revendication 11, l'article étant un film.

**15.** Un article fait à partir de la composition de la revendication 11, l'article étant un article moulé par injection.

**16.** Un article fait à partir de la composition de la revendication 11, l'article étant un article moulé par soufflage.

**17.** Un article fait à partir de la composition de la revendication 11, l'article étant un article moulé par rotation.

**18.** Un article fait à partir de la composition de la revendication 11, l'article étant un tuyau extrudé.

**19.** Un article fait à partir de la composition de la revendication 11, l'article étant une fibre extrudée.

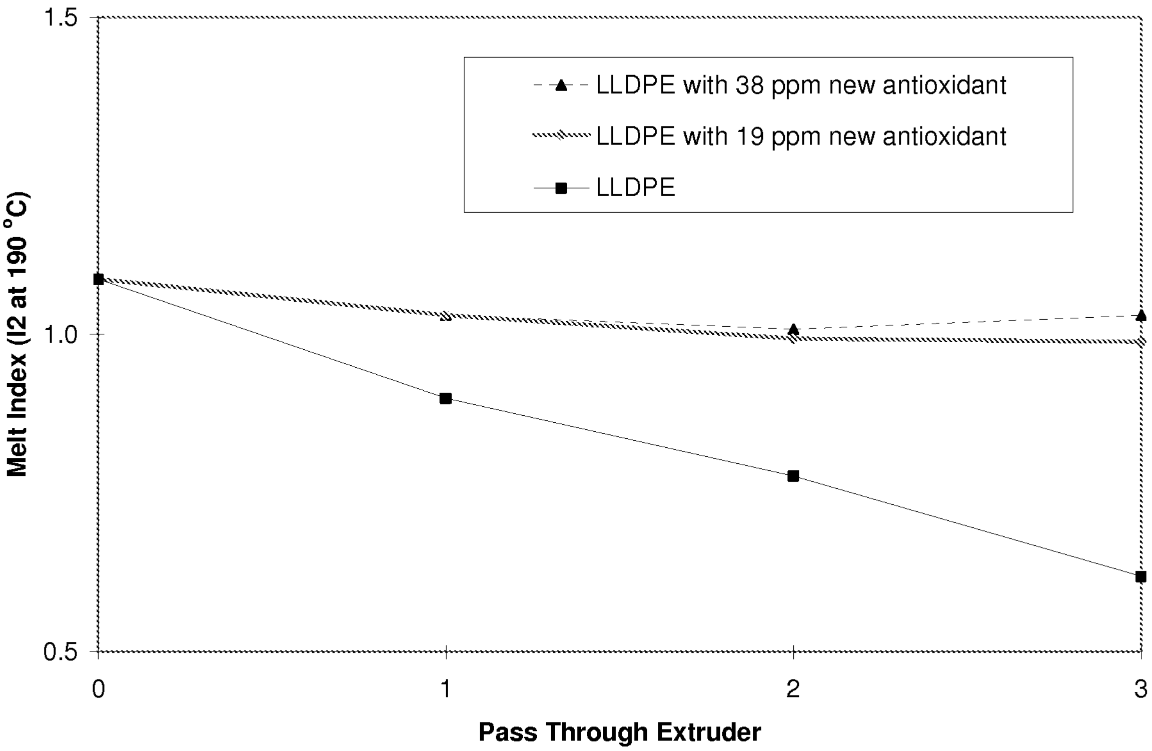
1.5
1.0
0.5
Melt Index (I2 at 190 °C)
0
1
2
3
Pass Through Extruder
LLDPE with 38 ppm new antioxidant
LLDPE with 19 ppm new antioxidant
LLDPE

Figure 1

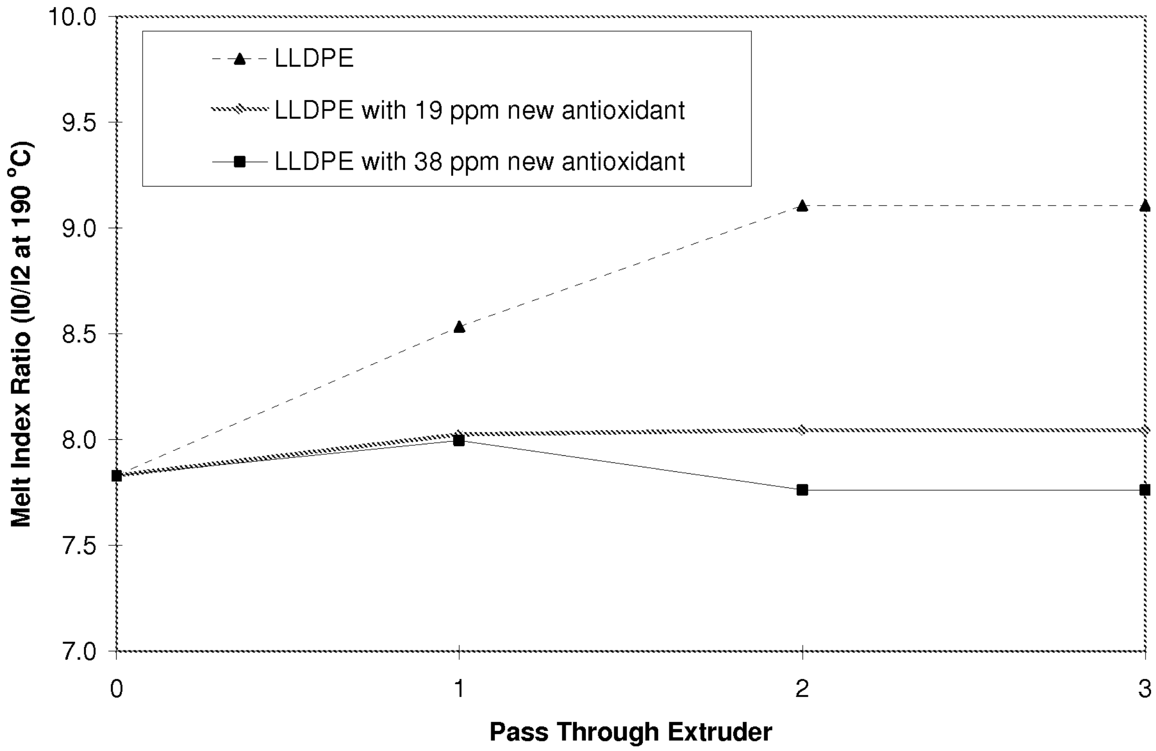
10.0
9.5
9.0
8.5
8.0
7.5
7.0
Melt Index Ratio (I0/I2 at 190 °C)
0
1
2
3
Pass Through Extruder
LLDPE
LLDPE with 19 ppm new antioxidant
LLDPE with 38 ppm new antioxidant

Figure 2

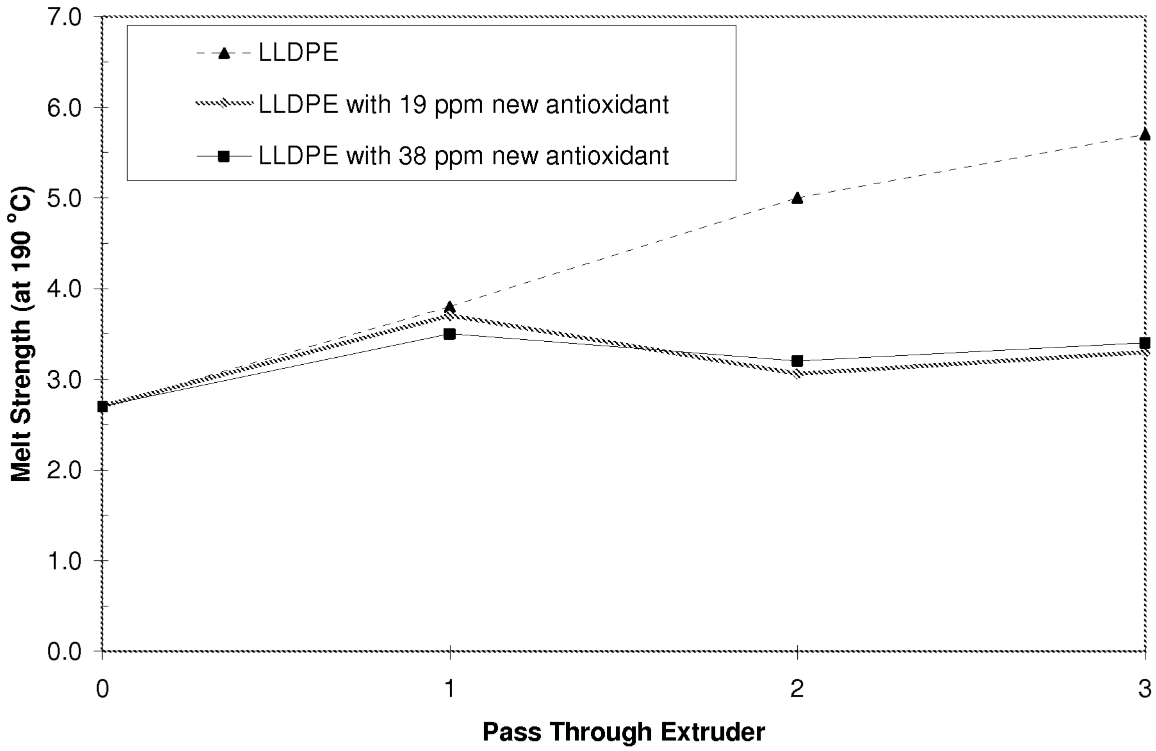
7.0
6.0
5.0
4.0
3.0
2.0
1.0
0.0
0
1
2
3
LLDPE
LLDPE with 19 ppm new antioxidant
LLDPE with 38 ppm new antioxidant
Melt Strength (at 190 °C)
Pass Through Extruder

Figure 3

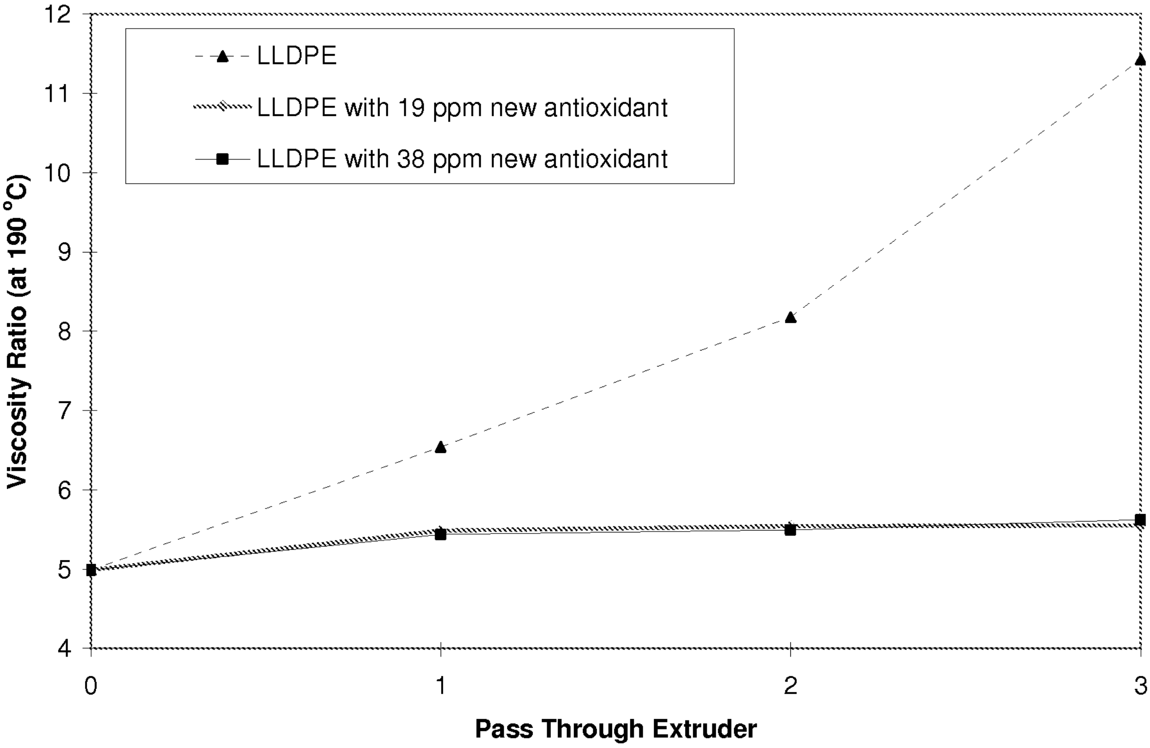

12
11
10
9
8
7
6
5
4
0
1
2
3
LLDPE
LLDPE with 19 ppm new antioxidant
LLDPE with 38 ppm new antioxidant
Viscosity Ratio (at 190 °C)
Pass Through Extruder


Figure 4

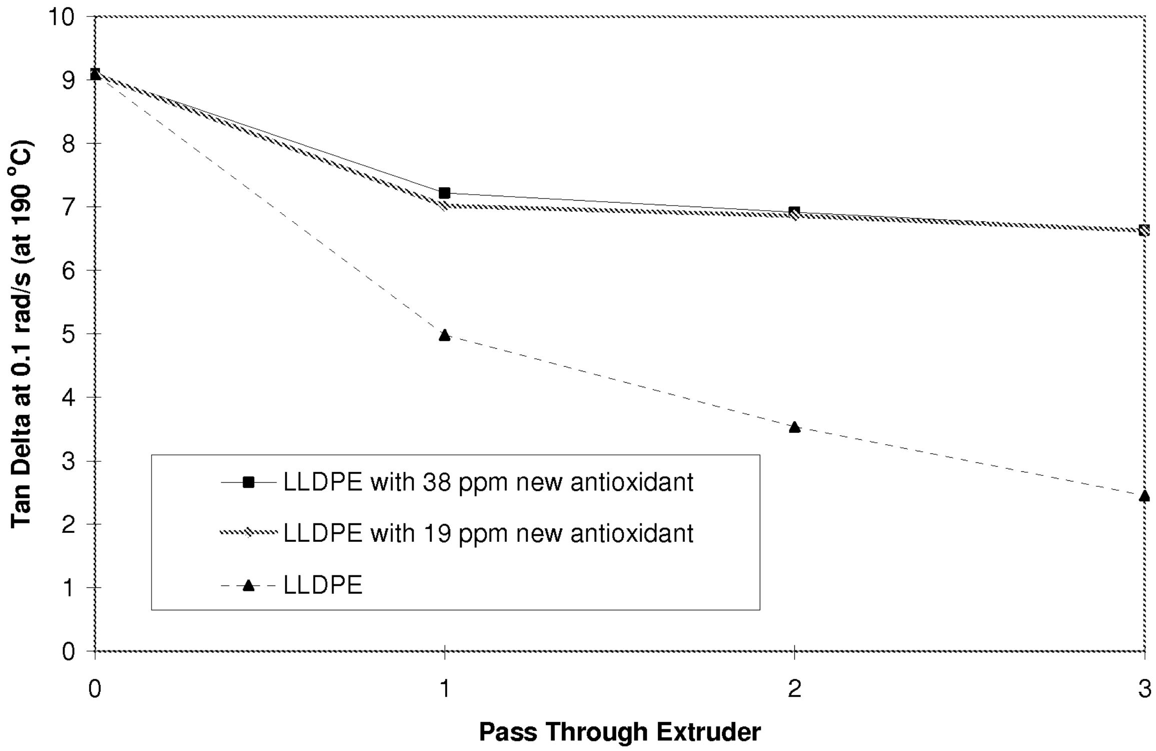
10
9
8
7
6
5
4
3
2
1
0
Tan Delta at 0.1 rad/s (at 190 °C)
0
1
2
3
Pass Through Extruder
LLDPE with 38 ppm new antioxidant
LLDPE with 19 ppm new antioxidant
LLDPE

Figure 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 1944327 A
- EP 190720 A
- US 2005009992 A
- EP 073488 A
- EP 313076 A
- GB 2085898 A


### Non-patent literature cited in the description


- **MOUREY ; BALKE.** Chromatography Polym. 1992
- **BALKE ; THITIRATSAKUL ; LEW ; CHEUNG ; MOUREY.** Chromatography Polym. 1992
- **WILLIAMS ; WARD.** Polym. Letters. *J. Polym. Sci.,* 1968, vol. 6, 621
- **ZIMM, B.H.** *J. Chem. Phys.,* 1948, vol. 16, 1099
- **KRATOCHVIL, P.** Classical Light Scattering from Polymer Solutions. Elsevier, 1987
- **YAU ; WALLACE W.** Examples of Using 3D-GPC - TREF for Polyolefin Characterization. *Macromol. Symp.,* 2007, vol. 257, 29-45